# EUROPÄISCHE PATENTSCHRIFT

(11) **EP 0 761 992 B1**
(45) Veröffentlichungstag und Bekanntmachung des Hinweises auf die Patenterteilung: **24.05.2000**
(21) Anmeldenummer: 96113599.3
(22) Anmeldetag: 24.08.1996
(51) Int. Cl.: F16B 25/10

(54) **Gewindeformendes Verbindungselement**
Self-tapping fastening element
Elément de fixation auto-taraudeur

(30) Priorität: 06.09.1995 DE 19532874
(43) Veröffentlichungstag der Anmeldung: 12.03.1997
(73) Patentinhaber: A-Z Ausrüstung und Zubehör GmbH & Co. KG, 45525 Hattingen (DE)
(72) Erfinder: Dicke, Robert, Dipl.-Ing., 58256 Ennepetal (DE)
(74) Vertreter: Patentanwälte Dr. Solf & Zapf

(56) Entgegenhaltungen:
- DE-A- 3 335 092
- FR-A- 1 008 781
- FR-A- 2 330 906
- GB-A- 1 461 995
- US-A- 4 834 602
- US-A- 4 963 064

## Beschreibung

Die vorliegende Erfindung betrifft eine gewindeformende Schraube, mit einem sich zumindest teilweise über ihren Schraubenschaft erstreckenden ein- oder mehrgängigen Gewinde, einer kontinuierlich sich verjüngenden, auf eine Spitze hin zulaufenden Schraubenspitze und vorzugsweise einem Schraubenkopf, wobei das Gewinde bis zur Spitze der Schraubenspitze verläuft und wobei im Bereich der Schraubenspitze an deren Umfangsfläche sich mindestens ein Reibkantenbereich in Schraubenlängsrichtung zumindest über eine Teillänge der Schraubenspitze erstreckt, welcher mindestens von einer Rippe gebildet wird, deren Querschnitt die Form eines Dreicks aufweist, das mit seiner Spitze die Reibkante bildet.

Ein gewindeformendes Verbindungselement, insbesondere eine Schraube mit einem sich zumindest teilweise über ihren Schraubenschaft erstreckenden ein- oder mehrgängigen Gewinde, einer Schraubenspitze und vorzugsweise einem Schraubenkopf, wobei das Gewinde bis zur Spitze der Schraubenspitze verläuft, ist z.B. aus der DE-A-33 35 092 bekannt. Diese bekannte Schraube weist aufgrund der auf der Flankenfläche des Gewindeganges die Flankenfläche unterbrechenden Vertiefungen im Abschnitt von Wellentälern der wellenförmig verlaufenden Gewindekante ein reduziertes Eindrehmoment auf. Diese Schraube hat sich in der Praxis sehr gut bewährt.

In der US-A-4 834 602 ist eine gattungsgemäße Schraube beschrieben, die Bohrkanten mit dreieckigem Querschnitt aufweist, die eine hauptsächlich bohrende bzw. einschneidende Wirkung besitzen, da diese Kanten vorwiegend im Schaftbereich des Verbindungselementes angeordnet sind. Nur ein kleiner Teil der Bohrkanten ragt in den oberen Bereich der Schraubenspitze hinein. Die Bohrkanten besitzen einen Maximaldurchmesser, der größer als der Kerndurchmesser des Schaftes ist.

Aus der FR-A-1 008 781 ist eine Schraube mit einem Schraubenkopf und einem dreigeteilten Schaft bekannt. Der Schaft besitzt einen sich kontinuierlich verjüngenden, auf eine Spitze hin zulaufenden Spitzenabschnitt, der aus Rippen gebildet ist, die an der Spitze des Spitzenabschnittes beginnen und deren Höhe in Richtung des Schraubenschaftes ansteigt. An den Spitzenabschnitt schließen sich aufeinanderfolgend ein sich kontinuierlich auf den Spitzenabschnitt hin verjüngender Gewindeabschnitt und ein gewindefreier kopfnaher Schaftabschnitt an. Das Gewinde beginnt an der Stelle, wo die Rippen enden, und erstreckt sich bis zu dem gewindefreien Schaftabschnitt. Diese bekannte Schraube weist den Nachteil auf, daß sie im gesamten Spitzenabschnitt bei einem Eindrehen schlecht faßt.

Der vorliegenden Erfindung liegt die Aufgabe zugrunde, ein gewindeformendes Verbindungselement, insbesondere eine selbstbohrende Schraube der gattungsgemäßen Art, zu schaffen, bei dem das Anzugsmoment zu Beginn des Einschraubens einen flachen (geringen) Anstieg aufweist, wobei aber die Haltekräfte im Vergleich zu bekannten Verbindungselementen, z.B. Schrauben, nicht verringert sind.

Erfindungsgemäß wird dies dadurch erreicht, daß der Reibkantenbereich an der Spitze der Schraubenspitze beginnt und maximal der Länge der Schraubenspitze entspricht, wobei die Höhe der Rippe in Richtung des Schraubenschaftes ansteigt und der größte Durchmesser im Reibkantenbereich nicht größer ist als der Kerndurchmesser des Schraubenschaftes. Die erfindungsgemäße Schraube besitzt somit ein bis zur Spitze der Schraubenspitze durchgehendes Gewinde, wodurch eine Greifspitze ausgebildet wird, und einen Reibbereich. Dieser Reibbereich zerschneidet die Materialfasern und die Greifspitze faßt sofort beim Eindrehen an, so daß unmittelbar eine Axialkraft entsteht. Die erfindungsgemäße Schraube ist insbesondere für Weichholz geeignet. Der Reibbereich hat eine so geringfügige spanende Wirkung, daß die Haltekräfte nicht beeinträchtigt werden. Aufgrund der speziellen erfindungsgemäßen Ausgestaltung wird der Kerndurchmesser nicht verändert, wodurch gewährleistet ist, daß die Haltekräfte nicht gemindert werden.

Vorteilhafte Ausführungen der Erfindung sind in den Unteransprüchen enthalten. Anhand der in den beiliegenden Zeichnungen dargestellten Ausführungsbeispiele wird die Erfindung näher erläutert. Es zeigen:
- Fig. 1: eine Seitenansicht einer ersten Ausführungsform einer erfindungsgemäßen Schraube,
- Fig. 2: eine Teilansicht eines zweiten Ausführungsbeispiels einer erfindungsgemäßen Schraube in Seitenansicht,
- Fig. 3: einen Schnitt entlang der Schnittlinie III-III in Fig. 2.

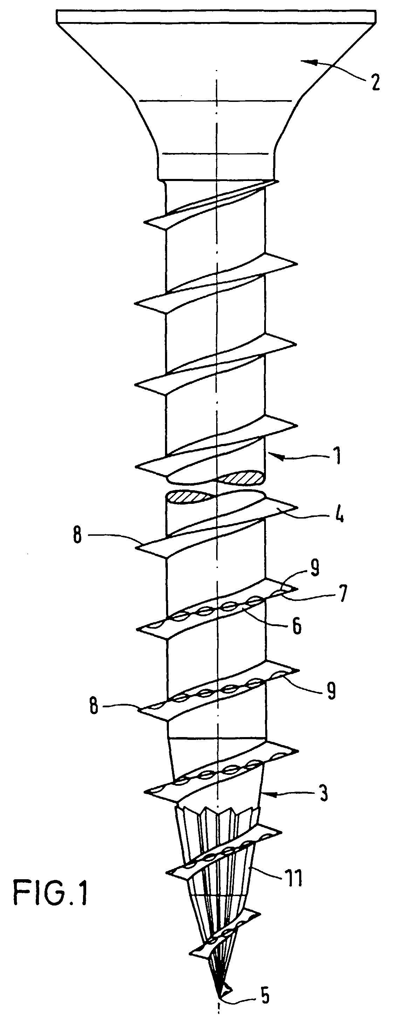

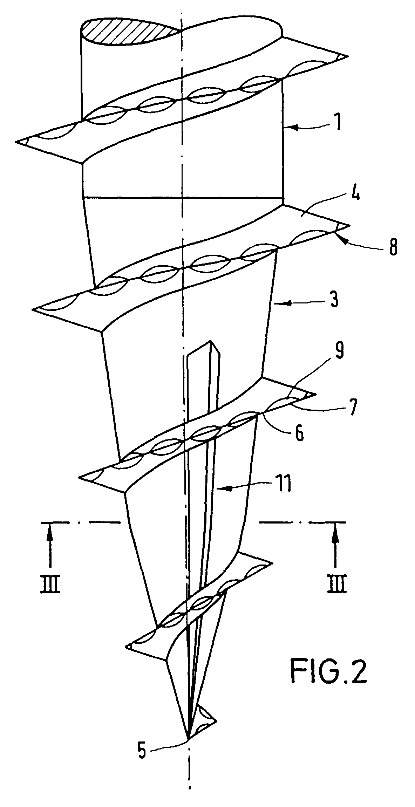

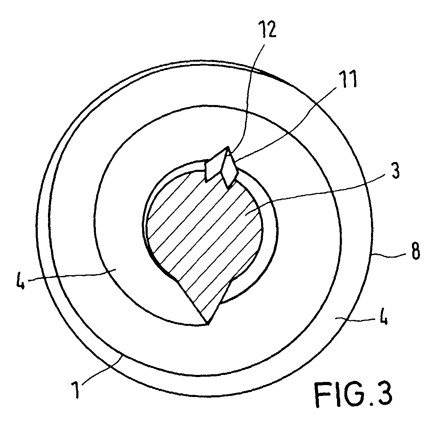

Wie sich aus Fig. 1 ergibt, besteht eine erfindungsgemäße Schraube aus einem Schraubenschaft 1, einem Schraubenkopf 2 mit einem einfachen Schlitz oder Kreuzschlitz oder dergleichen und einer Schraubenspitze 3. Der Schraubenschaft 1 weist über seine gesamte Länge einen gleichen Durchmesser auf, und die Schraubenspitze 3 verjüngt sich vom Schraubenschaft 1 kontinuierlich bis zu ihrer Spitze 5 hin. Am Schraubenschaft 1 und an der Schraubenspitze 3 ist ein Schraubgewinde 4 ausgebildet, das bis zur Spritze 5 der Schraubenspitze 3 verläuft. Die den Gewindegrat bildende Kante 8 der das Gewinde 4 bildenden Gewindegänge verläuft im dargestellten Ausführungsbeispiel wellenförmig, d.h. es ist eine stetige Folge von Erhöhungen (Wellenberge 6) und Vertiefungen (Wellentäler 7) vorhanden, wobei der Gewindeaußendurchmesser durch den Abstand der Gewindekante 8 von der Mittelachse der Schraube im Bereich der Wellenberge 6 bestimmt wird. Weiterhin sind im dargestellten vorteilhaften Ausführungsbeispiel auf den Flanken des Gewindeganges jeweils im Bereich der Wellentäler 7 Vertiefungen 9 ausgebildet. Hierbei bildet die Gewindekante 8 im Bereich des jeweiligen Wellentals 7 die Oberbegrenzung der Vertiefungen 9. Die Vertiefungen 9 sind im Bereich der Schraubenspitze 3 sowie im anschließenden Bereich des Schraubenschaftes 1 über die Ganghöhe von zwei Gewindegängen angeordnet. Weiterhin ist erfindungsgemäß vorgesehen, daß im Bereich der Schraubenspitze 3 an deren Umfangsfläche sich mindestens ein Reibkantenbereich 11, siehe Fig. 2, über eine Teillänge der Schraubenspitze 3 im wesentlichen axial erstreckt. Wie aus Fig. 1 zu erkennen ist, kann es zweckmäßig sein, wenn eine Vielzahl von Reibkantenbereichen 11 in gleichmäßigen Abständen auf dem Umfang der Schraubenspitze 3 verteilt nebeneinander verlaufend ausgebildet sind. In Fig. 1 ist eine, umfangsgemäß gesehen, unmittelbare Aneinanderreihung von Reibkantenbereichen 11 vorhanden. Es liegt ebenfalls im Rahmen der Erfindung, wenn der oder die Reibkantenbereich(e) 11 sich zumindest partiell auch in Umfangsrichtung erstrecken. Vorteilhafterweise ist der Reibkantenbereich 11 bzw. die Reibkantenbereiche 11 derart ausgebildet, daß der größte Durchmesser der Schraubenspitze 3 im Abschnitt der Reibkantenbereiche 11 kleiner/gleich dem Kerndurchmesser des Schraubenschaftes 1 ist. Die axiale Erstreckung des Reibkantenbereiches 11 bzw. der Reibkantenbereiche 11 entspricht von der Spitze 5 ausgehend minimal einer Ganghöhe des Schraubgewindes und maximal der Länge der Schraubenspitze 3. Im dargestellten Ausführungsbeispiel entspricht die axiale Erstreckung des Reibkantenbereiches 11 bzw. der Reibkantenbereiche 11 etwa zwei Ganghöhen. Wie insbesondere aus Fig. 3 zu erkennen ist, besitzt der Reibkantenbereich 11, im Querschnitt gesehen, die Form eines Dreiecks. Hierbei können symmetrische oder asymmetrische Querschnittsformen vorgesehen sein. Weiterhin ist zu erkennen, daß in den dargestellten Ausführungsbeispielen der Reibkantenbereich 11 als Rippe ausgebildet ist, wobei die Rippenspitze 12 die Reibkante bildet. Zudem ist es vorteilhaft, wenn sich die Rippenhöhe in Richtung auf den Schraubenkopf 2, ausgehend von der Spitze 5, kontinuierlich vergrößert. Hierbei besitzt die Rippenhöhe im Bereich der Spitze 5 den Betrag Null und steigt von dort zu einer derartigen Rippenhöhe an, daß am Ende der den Reibkantenbereich 11 bildenden Rippe der größte Durchmesser der Schraubenspitze 3 im Reibkantenbereich 11 kleiner/gleich dem Kerndurchmesser des Schraubenschaftes 1 ist.

Weiterhin ist zu erkennen, daß im dargestellten vorteilhaften Ausführungsbeispiel die Schraubenspitze 3 als Spitze mit einem gestuften Winkel so ausgebildet ist, so daß sie in ihrem an der Spitze 5 beginnenden Bereich, der eine axiale Erstreckung von etwa einer Ganghöhe hat, einen größeren Neigungswinkel besitzt als im sich daran anschließenden Bereich bis zum Ende der Schraubenspitze 3.

Durch die erfindungsgemäße Ausgestaltung der als selbstbohrende und gewindeformende Schraube ausgebildeten erfindungsgemäßen Schraube mit dem bis zur Spitze 5 durchlaufenden Gewinde und mit der Ausbildung eines Reibkantenbereichs 11 im Bereich der Schraubenspitze 3 wird ein flacheres (geringeres) Anzugsmoment erreicht, ohne daß der Kerndurchmesser vergrößert wird. Hierbei wird ein Aufspleißen des Materials beim Einschrauben vermieden, da durch den Reibkegel die Materialfasern zerschnitten werden.

Es liegt im Rahmen der Erfindung, wenn die Gewindekante 8 glatt, d.h. ohne eine Folge von Wellenbergen 6 und Wellentälern 7, ausgebildet ist. Ebenfalls ist eine Ausführungsform möglich, wobei lediglich eine Folge von Wellenbergen 6 und Wellentälern 7 vorhanden ist, ohne, daß Vertiefungen 9 im Flankenbereich des Gewindeganges vorhanden sind. Auch kann das Schraubgewinde als mehrgängiges Gewinde ausgebildet werden.

## Patentansprüche

1. Gewindeformende Schraube, mit einem sich zumindest teilweise über ihren Schraubenschaft (1) erstreckenden ein- oder mehrgängigen Gewinde, einer kontinuierlich sich verjüngenden, auf eine Spitze (5) hin zulaufenden Schraubenspitze (3) und vorzugsweise einem Schraubenkopf (2), wobei das Gewinde bis zur Spitze (5) der Schraubenspitze (3) verläuft und wobei im Bereich der Schraubenspitze (3) an deren Umfangsfläche sich mindestens ein Reibkantenbereich (11) in Schraubenlängsrichtung zumindest über eine Teillänge der Schraubenspitze (3) erstreckt, welcher mindestens von einer Rippe gebildet wird, deren Querschnitt die Form eines Dreicks aufweist, das mit seiner Spitze (12) die Reibkante bildet,
**dadurch gekennzeichnet**, daß der Reibkantenbereich (11) an der Spitze (5) der Schraubenspitze (3) beginnt und maximal der Länge der Schraubenspitze (3) entspricht, wobei die Höhe der Rippe in Richtung des Schraubenschaftes (1) ansteigt und der größte Durchmesser im Reibkantenbereich (11) nicht größer ist als der Kerndurchmesser des Schraubenschaftes (1).

2. Verbindungselement nach Anspruch 1,
**dadurch gekennzeichnet**, daß der Reibkantenbereich (11) sich zumindest partiell in Umfangsrichtung der Schraubenspitze (3) erstreckt.

3. Verbindungselement nach Anspruch 1 oder 2,
**dadurch gekennzeichnet**, daß sich der Reibkantenbereich (11) mindestens über eine Ganghöhe des Schraubgewindes (4) im Bereich der Schraubenspitze (3) erstreckt.

4. Verbindungselement nach einem der Ansprüche 1 bis 3,
**dadurch gekennzeichnet**, daß eine Vielzahl von gleichgerichteten Rippen am Umfang der Schraubenspitze (3) gleichmäßig verteilt angeordnet ist.

5. Verbindungselement nach einem der Ansprüche 1 bis 4,
**dadurch gekennzeichnet**, daß die den Reibkantenbereich (11) bildenden Rippen mit einer Rippenhöhe von Null an der Spitze (5) der Schraubenspitze (3) beginnen und die Rippenhöhe im wesentlichen kontinuierlich ansteigt.

6. Verbindungselement nach einem der Ansprüche 1 bis 5,
**dadurch gekennzeichnet**, daß die Schraubenspitze (3) als Spitze mit zwei Abschnitten unterschiedlicher Winkelsteigung ausgebildet ist.

7. Verbindungselement nach einem der Ansprüche 1 bis 6,
**dadurch gekennzeichnet**, daß die Gewindekante (8) des Schraubgewindes (4) mindestens im Bereich der Schraubenspitze (3) und im Bereich des sich an die Schraubenspitze (3) anschließenden Gewindeganges über etwa ein bis zwei Ganghöhen wellenförmig ausgebildet ist, d.h. es ist eine Folge von Wellenbergen (6) und Wellentälern (7) vorhanden, wobei im Bereich der Wellentäler (7) im Flankenbereich Vertiefungen (9) ausgebildet sind.

## Claims

1. Self-tapping screw, having a single- or multistart thread extending at least partly over its screw shank (1), a continuously narrowing screw tip (3) tapering to a point (5), and preferably a screw head (2), the thread running up to the point (5) of the screw tip (3), and at least one friction-edge region (11) extending in the region of the screw tip (3) on the circumferential surface of the latter at least over a partial length of the screw tip (3) in the longitudinal direction of the screw, the friction-edge region (11) being formed by at least one rib, the cross section of which has the shape of a triangle, which with its apex (12) forms the friction edge, characterized in that the friction-edge region (11) starts at the point (5) of the screw tip (3) and corresponds at most to the length of the screw tip (3), the height of the rib increasing in the direction of the screw shank (1), and the largest diameter in the friction-edge region (11) not being greater than the minor diameter of the screw shank (1).

2. Connecting element according to Claim 1, characterized in that the friction-edge region (11) extends at least partly in the circumferential direction of the screw tip (3).

3. Connecting element according to Claim 1 or 2, characterized in that the friction-edge region (11) extends at least over one pitch of the screw thread (4) in the region of the screw tip (3).

4. Connecting element according to one of Claims 1 to 3, characterized in that a multiplicity of equidirectional ribs are arranged in a uniformly distributed manner on the circumference of the screw tip (3).

5. Connecting element according to one of Claims 1 to 4, characterized in that the ribs forming the friction-edge region (11) start with a rib height of zero at the point (5) of the screw tip (3), and the rib height increases essentially continuously.

6. Connecting element according to one of Claims 1 to 5, characterized in that the screw tip (3) is designed as a point having two sections of different taper.

7. Connecting element according to one of Claims 1 to 6, characterized in that the thread edge (8) of the screw thread (4), at least in the region of the screw tip (3) and in the region of the thread turn adjoining the screw tip (3), is of wave-like design over about one to two pitches, i.e. there is a sequence of wave crests (6) and wave troughs (7), recesses (9) being formed in the region of the wave troughs (7) in the flank region.

## Revendications

1. Vis filetée, comportant un filetage simple ou multiple s'étendant au moins en partie sur sa tige (1), une extrémité de vis (3) se rétrécissant en continu pour se terminer par une pointe (5) et, de préférence, une tête de vis (2), le filetage allant jusqu'à la pointe (5) de l'extrémité de la vis (3) et au moins une zone d'arête de frottement (11) s'étendant dans la zone de l'extrémité de la vis (3), sur sa surface circonférentielle, dans son sens longitudinal et sur au moins une partie de sa longueur, ladite zone d'arête de frottement étant formée par une nervure dont la section présente la forme d'un triangle formant avec sa pointe (12) l'arête de frottement,
caractérisée en ce que la zone d'arête de frottement (11) commence à la pointe (5) de l'extrémité de la vis (3) et correspond au maximum à la longueur de cette extrémité (3), la hauteur de la nervure augmentant dans le sens de la tige de la vis (1) et le diamètre le plus grand dans la zone de l'arête de frottement (11) n'étant pas plus grand que le diamètre du noyau de la tige (1).

2. Elément d'assemblage selon la revendication 1, caractérisé en ce que la zone d'arête de frottement (11) s'étend au moins partiellement dans le sens circonférentiel de l'extrémité de la vis (3).

3. Elément d'assemblage selon la revendication 1 ou 2,
caractérisé en ce que la zone d'arête de frottement (11) s'étend au moins sur un pas du filetage (4) dans la zone de l'extrémité (3) de la vis.

4. Elément d'assemblage selon l'une des revendications 1 à 3,
caractérisé en ce qu'un grand nombre de nervures orientées dans le même sens sont réparties régulièrement sur la circonférence de l'extrémité (3) de la vis.

5. Elément d'assemblage selon l'une des revendications 1 à 4,
caractérisé en ce que la hauteur des nervures formant la zone d'arête de frottement (11) est nulle à la pointe (5) de l'extrémité de la vis (3) et qu'elle augmente essentiellement de manière continue.

6. Elément d'assemblage selon l'une des revendications 1 à 5,
caractérisé en ce que l'extrémité de la vis (3) est réalisée comme une pointe avec deux sections de pente angulaire différente.

7. Elément d'assemblage selon l'une des revendications 1 à 6,
caractérisé en ce que l'arête du filet (8) du filetage (4) est ondulée sur environ un à deux pas, au moins dans la zone de l'extrémité de la vis (3) et dans la zone du filetage faisant suite à l'extrémité de la vis (3), c'est-à-dire qu'on a une succession de crêtes (6) et de creux (7) d'ondes, des dépressions (9) étant formées à l'endroit des creux (7) dans la zone du flanc.
